Europäisches Patentamt

European Patent Office

Office européen des brevets

(11) Numéro de publication: **0 233 624**
**A2**

## DEMANDE DE BREVET EUROPEEN

(21) Numéro de dépôt: 87102160.6

(22) Date de dépôt: 16.02.87

(51) Int. Cl.4: **C21B 5/00** , B65G 53/50 ,
//F23K3/02

(30) Priorité: 19.02.86 LU 86311

(43) Date de publication de la demande:
26.08.87 Bulletin 87/35

(84) Etats contractants désignés:
AT BE DE ES FR GB IT LU NL SE

(71) Demandeur: **PAUL WURTH S.A.**
**32 rue d'Alsace**
**L-1122 Luxembourg(LU)**

(72) Inventeur: **Andonov, Radomir**
**5 rue Belle-Vue**
**L-8215 Mamer(LU)**

(74) Mandataire: **Meyers, Ernest et al**
**Office de Brevets Freylinger & Associés 46**
**rue du Cimetière B.P. 1153**
**L-1011 Luxembourg(LU)**

(54) **Dispositif de dosage de matières pulvérulentes et application à l'injection de quantités dosées de combustibles solides dans un four à cuve.**

(57) Le dispositif comprend une tubulure cylindrique (10) en communication avec un réservoir de matières pulvérulentes et une admission (18) de gaz sous pression. La tubulure (10) présente au moins un orifice de sortie (22) et une chemise intérieure (32) coaxiale à la tubulure (10) et en contact avec celle-ci, comporte une ouverture (34), pouvant, par déplacement de la chemise former avec l'orifice (22) un passage plus ou moins grand.

Le dispositif est utilisable pour former un courant pneumatique ou régler le débit d'un courant pneumatique.

Fig.1

## "Dispositif de dosage de matières pulvérulentes et application à l'injection de quantités dosées de combustibles solides dans un four à cuve."

La présente invention concerne un dispositif de dosage de matières pulvérulentes comprenant une tubulure cylindrique en communication avec un réservoir de matières pulvérulentes et une conduite de gaz sous pression. L'invention concerne également, à titre d'application, un dispositif d'injection de quantités dosées de combustibles solides dans un four à cuve.

Un dispositif de ce genre est décrit dans le document GB-A-2086553. Le système de dosage proprement dit est réalisé selon ce document au niveau d'un tuyau pourvu d'une ou plusieurs fentes d'admission des matières pulvérulentes et traversant diamétralement la tubulure. Les fentes d'admission sont masquées à des degrés variables par la rotation d'une douille coaxiale audit tuyau et présentant des fentes correspondant à celles du tuyau.

Ce dispositif présente l'inconvénient que le courant de matières pulvérulentes subit au niveau de la pénétration dans le tuyau à travers les fentes de dosage une déviation à angle droit, ce qui accélère l'usure par les effets d'abrasion et augmente les risques de formation de bouchons. Un autre inconvénient est le passage diamétral du tuyau par la tubulure, ce qui gêne le passage de la matière pulvérulente.

Le but de la présente invention est de prévoir un nouveau dispositif de dosage qui ne présente pas les inconvénients du dispositif connu décrit ci-dessus.

Pour atteindre cet objectif, le dispositif proposé par la présente invention est essentiellement caractérisé en ce que la paroi de la tubulure présente au moins un orifice de sortie en communication avec un tuyau d'évacuation exérieur, en ce qu'il est prévu au moins une chemise intérieure coaxiale à la tubulure, en contact avec celle-ci, en ce que ladite chemise comporte au moins une ouverture et en ce qu'il est prévu des moyens extérieurs pour déplacer la chemise par rapport à la tubulure de manière à déplacer la ou les ouvertures de la chemise, devant le ou les orifice(s) de sortie.

L'orifice de sortie est, de préférence, de forme oblongue alors que l'ouverture de la chemise est, de préférence, en forme de flèche orientée dans le sens de déplacement de la chemise.

Selon un mode de réalisation préféré, l'axe longitudinal de l'orifice oblong est orienté suivant la génératrice de la tubulure, l'ouverture en forme de flèche est orientée dans le sens circulaire de la chemise, tandis que le déplacement de celle-ci est un mouvement de rotation.

Selon un autre mode de réalisation, l'axe longitudinal de l'orifice oblong est orienté dans le sens circulaire de la tubulure, l'ouverture en forme de flèche est orientée suivant la génératrice de la chemise, tandis que le déplacement de celle-ci est un mouvement dans le sens axial.

Selon un autre aspect de l'invention, il est prévu un dispositif auto-nettoyant constitué par un doigt disposé à côté de l'orifice oblong sur l'axe de déplacement de l'ouverture en forme de flèche et s'étendant radialement dans celle-ci.

Ce doigt présente une section triangulaire effilée dont la pointe est dirigée vers la pointe de l'ouverture en forme de flèche. Les encrassements ou croûtes pouvant se former dans la pointe de l'ouverture en forme de flèche peuvent ainsi être dégagés par déplacement de la chemise de manière à faire reculer la pointe de l'ouverture en flèche contre le doigt.

D'autres particularités et caractéristiques ressortiront de la description d'un mode de réalisation préféré, présenté ci-dessous, à titre d'illustration , en référence aux dessins annexés dans lesquels :

la figure 1 montre une coupe verticale diamétrale d'un dispositif de dosage selon la présente invention ;

la figure 2 montre une vue en plan du dispositif de la figure 1 ;

les figures 3a et 3b montrent respectivement des vues agrandies en coupe verticale et de face de la partie de la chemise présentant l'ouverture en forme de flèche ;

les figures 4a et 4b montrent respectivement des vues agrandies en coupe verticale et de face de la partie de la tubulure présentant l'orifice oblong et

les figures 5a , 5b et 5c montrent le fonctionnement du système de dosage par rotation de la chemise.

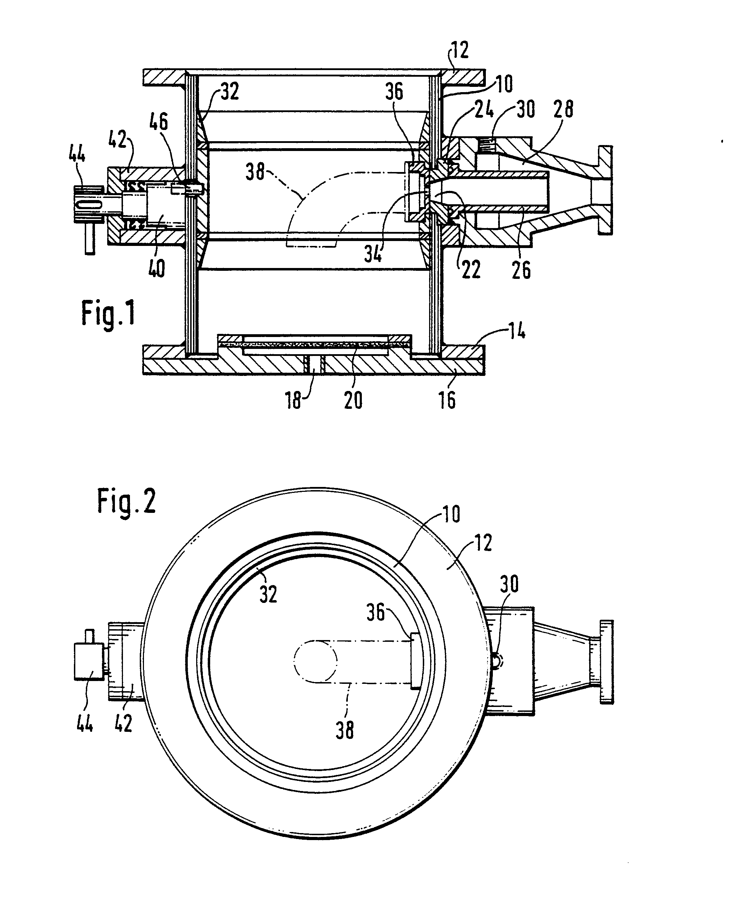

Le dispositif de dosage représenté sur les figures 1 et 2 comporte une tubulure cylindrique 10 pourvue de part et d'autre de brides 12 et 14. Cette tubulure 10 est rattachée par la bride 12 à un réservoir , non représenté, contenant des matières pulvérulentes , comme par exemple du charbon en poudre utilisé comme combustible pour l'injection dans un four à cuve. La bride 14 sert à recevoir une plaque de fermeture 16 munie d'une ouverture axiale 18 pour l'admission d'un gaz sous pression dans la tubulure 10 et dont le but est de créer une certaine fluidité de la matière pulvérulente tombant du réservoir dans la tubulure 10. La pénétration du gaz sous pression dans la tubulure 10 est réalisée à travers une plaque de séparation 20 qui est poreuse pour les gaz mais qui retient la matière pulvérulente.

La tubulure 10 comporte un orifice latéral de sortie 22 qui est prévu , soit directement dans la paroi de la tubulure 10 ou, de préférence , dans une pièce séparée 24 remplaçable . Cet orifice 22, qui sera expliqué plus en détail par la suite , débouche dans un tuyau d'évacuation 26 fixé radialement sur la tubulure 10. Ce tuyau 26 débouche dans une chambre conique convergente de mélange 28 dans laquelle est introduit , à travers une ouverture latérale 30, un fluide de propulsion , tel que de l'air sous pression pour propulser la matière pulvérulente vers le lieu de l'utilisation , en l'occurence un four à cuve.

A l'intérieur de la tubulure 10 se trouve une chemise cylindrique 32 coaxiale à la tubulure 10 et pourvue au niveau de l'orifice 22 d'une ouverture 34 dont la coopération avec l'orifice 22 sera expliquée plus en détail par la suite. L'ouverture 34 peut être pratiquée directement dans la chemise 32 ou, de préférence, comme représenté sur la figure, dans une pièce 36 en forme d'assiette fixée à cet endroit à la chemise 32. Cette assiette 36 peut être prolongée vers l'intérieur de la tubulure 10 en direction de l'ouverture 18 d'entrée d'un gaz sous pression par un tube coudé 38 pour guider la matière pulvérulente vers la sortie.

Le dispositif comporte également des moyens connus en soi pour faire tourner la chemise 32 autour de son axe par rapport à la tubulure 10. Ces moyens peuvent être constitués , par exemple, comme représenté sur la figure 1, par un cylindre 40 logé dans un boîtier 42 fixé à l'extérieur de la paroi 10 , ce cylindre 40 étant mobile autour de son axe sous l'action de moyens appropriés , tel qu'un moteur électrique 44. Ce cylindre 40 comporte , sur sa face adjacente à la tubulure 10 , une fente radiale dans laquelle est engagé un doigt 46 qui traverse la tubulure 10 et qui est solidaire de la chemise 32. Par conséquent, une rotation du cylindre 40 autour de son axe occasionne, par glissement du doigt 46 dans la fente radiale du cylindre 40, une rotation de la chemise 32 autour de son axe.

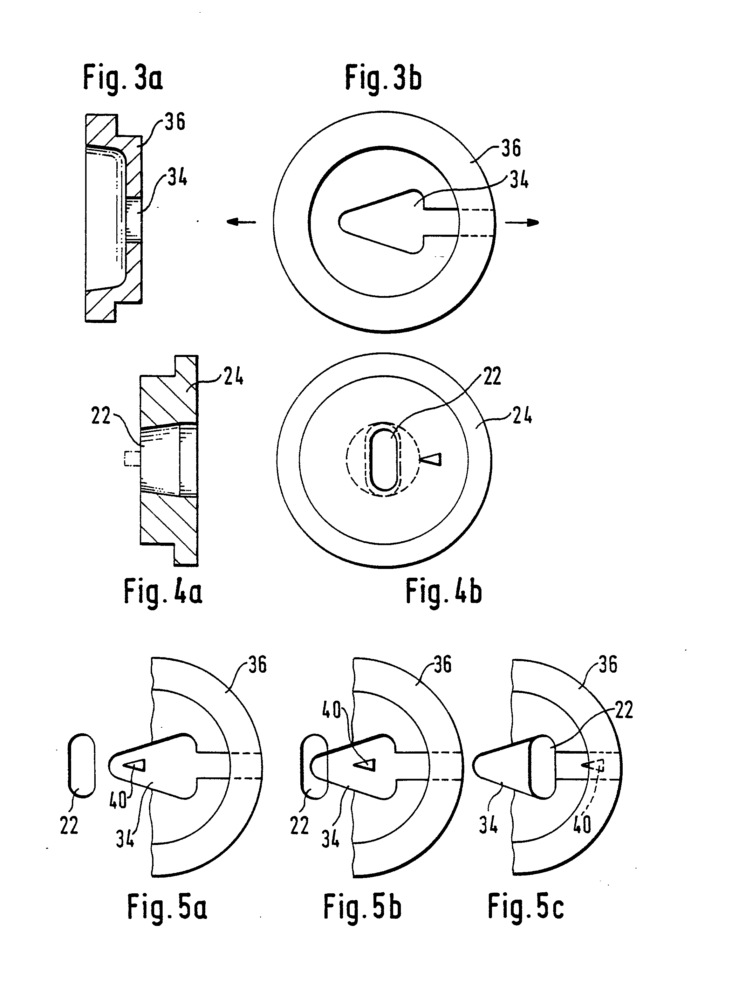

La figure 3a montre une vue agrandie de l'assiette 36 qui est montée sur la chemise 32 de manière que son creux soit tourné vers l'intérieur de cette chemise 32. Cette assiette 36 comporte, comme représenté sur la figure 3b, une ouverture 34 en forme de flèche pour permettre le passage de la matière pulvérulente . Dans l'exemple représenté, cette flèche est orientée dans le sens circulaire , c'est-à-dire perpendiculairement par rapport à la génératrice de la chemise 32. Les deux flèches de part et d'autre de l'assiette 36 sur la figure 3b illustrent la possibilité de rotation de cette chemise 32.

La figure 4a montre, en agrandie, la pièce 24 fixée sur la tubulure 10 comportant l'orifice de sortie 22 destiné à coopérer avec l'ouverture 34. Cet orifice 22 présente sur la face intérieure de la pièce 24 la forme d'une fente allongée qui, à travers la pièce 24, passe progressivement en forme circulaire sur la face extérieure pour venir épouser la forme de la section du tuyau d'évacuation 26. Dans l'exemple représenté , l'orifice oblong 22 est orienté de manière que son axe longitudinal soit parallèle à la génératrice de la tubulure 10, c'est-à-dire perpendiculaire à l'axe de l'ouverture en flèche 34 de la chemise 32.

La pièce 24 comporte également un doigt 40 disposé à côté de l'orifice oblong 22 sur l'axe de l'ouverture en flèche 34 et pénétrant radialement dans cette ouverture 34. Ce doigt possède une section en forme de triangle effilé comme montré sur la figure 4b.

Les figures 5a, 5b et 5c, qui sont des superpositions partielles des figures 3b et 4b, montrent la coopération entre la fente 22 et l'ouverture mobile 34 de la chemise 32 en vue de la formation d'un passage à section variable qui permet la sortie de quantités dosées de matières pulvérulentes dans le tuyau d'évacuation 26. La figure 5a correspond à la position fermée dans laquelle l'ouverture en flèche 34 se trouve complètement à l'extérieur de l'orifice 22. Une rotation de la chemise 32 permet le rapprochement de l'ouverture en flèche 34 de l'orifice 22 et à partir du moment où l'orifice 22 et l'ouverture 34 chevauchent , comme représenté par la figure 5b, leurs surfaces communes déterminent la section de passage de la matière pulvérulente . La poursuite du mouvement de rotation de la chemise 32 augmente progressivement la surface de cette section de passage jusqu'à la position d'ouverture maximale représentée sur la figure 5c. Comme le montre également cette figure , la longueur de l'orifice oblong 22 correspond exactement à la largeur maximale de l'ouverture en flèche 34.

Le dispositif de dosage comporte également un dispositif auto-nettoyant permettant le dégagement de bouchons dans le passage. En effet, lorsque la section de passage est relativement réduite, comme c'est le cas sur la figure 5b, il est possible que ce passage se bloque par un agglomérat de particules ou par une particule plus grosse insuffisamment concassée. Une telle particule qui reste bloquée dans le passage peut être cassée par cisaillement entre les bords de la pointe de l'ouverture 34 et le bord de l'orifice 22 par une rotation de la chemise 32 dans le sens de la fermeture , c'est-à-dire par déplacement de l'ouverture 34 vers la droite par rapport à l'orifice 22 sur la figure 5b. Si cette opération ne permet pas un dégagement complet du passage, résultant par exemple du fait qu'une particule reste bloquée dans la pointe de l'ouverture en flèche 34 ou que la pointe de celle-ci soit encrassée, la chemise 32 est tournée au-delà de la position de fermeture jusqu'à ce que le doigt 40 écrase les résidus calés dans la pointe de l'ouverture 34. Cette opération est ensuite suivie d'une rotation de la chemise 32 dans le sens contraire, c'est-à-dire dans le sens de l'ouverture pour ouvrir le passage aux particules écrasées précédemment.Si, malgré cela, le passage reste quand-même bloqué, l'opération peut être recommencée.

Il est à noter que cette opération de dégagement du passage peut être effectuée automatiquement sous l'action de détecteurs de débit situés en aval du dispositif de dosage. Dès que ces détecteurs signalent une baisse anormale du débit ou un arrêt total du passage de matières pulvérulentes, le moteur 44 actionne automatiquement la chemise 32 dans le sens de fermeture pour nettoyer la pointe de l'ouverture en flèche 34 à l'aide du doigt 40.

Il est possible de modifier le dispositif de manière que la variation de la section de passage de la matière pulvérulente, c'est-à-dire son dosage, soit effectuée par glissement axial de la chemise 32 au lieu d'une rotation de celle-ci comme dans le mode de réalisation décrit ci-dessus. A cet effet, l'ouverture en flèche 34 devrait être orientée dans le sens de la génératrice de la chemise 32 alors que l'orifice oblong 22 devrait être orienté dans le sens circulaire de la tubulure 10.

Il est également possible de prévoir dans une seule tubulure 10 plusieurs postes de dosage comme représenté sur les figures 3 à 5 répartis soit de façon circulaire autour de la tubulure , soit le long de la génératrice dans le sens de la hauteur. Toutes ces stations de dosage seraient dès lors actionnées simultanément et en synchronisme par le déplacement de la chemise 32.

Il est également possible de prévoir dans la même tubulure 10 plusieurs stations de dosage à l'aide de plusieurs chemises mobiles coaxiales juxtaposées . Chacune de celles-ci pourrait, dans ce cas, être associée à un dispositif d'entraînement indépendant pour régler de façon indépendante les différentes sections de passage de la matière pulvérulente.

L'invention n'est pas limitée à la forme particulière des ouvertures de dosage notamment la forme préférée en flèche de l'ouverture de la chemise. Cette ouverture peut notamment avoir une section circulaire ou d'autres formes suivant l'application à laquelle le dispositif de dosage est destiné.

Dans ce contexte, il reste à souligner que le dispositif décrit ci-dessus n'est pas seulement utilisable pour la formation d'un courant de transport pneumatique de matières pulvérulentes. Il peut également être utilisé pour le réglage du débit d'un courant pneumatique et être, à cet effet, incorporé dans une conduite de transport pneumatique. Dans ce cas, ses fonctions sont comparables à celles d'une vanne de réglage.

## Revendications

1. Dispositif de dosage de matières pulvérulentes comprenant une tubulure cylindrique (10) en communication avec un réservoir de matières pulvérulentes et une conduite (18) de gaz sous pression, caractérisé en ce que la paroi de la tubulure (10) présente au moins un orifice de sortie (22), en communication avec un tuyau d'évacuation extérieur (26), en ce qu'il est prévu au moins une chemise intérieure (32) coaxiale à la tubulure (10) en contact avec celle-ci, en ce que ladite chemise - (32) comporte une ouverture (34) et en ce qu'il est prévu des moyens extérieurs pour déplacer la chemise (32) par rapport à la tubulure (10) de manière à déplacer la ou les ouvertures (34) de la chemise, devant le ou les orifice(s) de sortie (22).

2. Dispositif selon la revendication 1, caractérisé en ce que l'orifice de sortie (22) a une forme oblongue et en ce que l'ouverture (34) de la chemise (32) est en forme de flèche orientée dans le sens de déplacement de la chemise.

3. Dispositif selon la revendication 2, caractérisé en ce que l'axe longitudinal de l'orifice oblong (22) est orienté suivant la génératrice de la tubulure (10), en ce que l'ouverture (34) en forme de flèche est orientée dans le sens circulaire de la chemise (32) et en ce que le déplacement de celle-ci est un mouvement de rotation.

4. Dispositif selon la revendication 2, caractérisé en ce que l'axe longitudinal de l'orifice oblong (22) est orienté dans le sens circulaire de la tubulure (10), en ce que l'ouverture (34) en forme de flèche est orientée suivant la génératrice de la chemise (32) et en ce que le déplacement de celle-ci est un mouvement dans le sens axial.

5. Dispositif selon l'une quelconque des revendications 2 à 4, caractérisé en ce que l'ouverture - (34) en forme de flèche est pratiquée dans une pièce en forme d'assiette (36) fixée sur la chemise (32).

6. Dispositif selon l'une quelconque des revendications 2 à 4, caractérisé en ce que l'orifice oblong (22) est pratiqué dans une pièce démontable (24) fixée dans la paroi de la tubulure - (10).

7. Dispositif selon l'une quelconque des revendications 2 à 6, caractérisé par un dispositif auto-nettoyant constitué par un doigt (40) disposé à côté de l'orifice oblong (22) sur l'axe de déplacement de l'ouverture (34) en forme de flèche et pénétrant radialement dans celle-ci.

8. Dispositif selon la revendication 7, caractérisé en ce que le doigt (40) présente une section triangulaire effilée dont la pointe est dirigée vers la pointe de l'ouverture (34) en forme de flèche.

9. Dispositif selon l'une quelconque des revendications 2 à 8, caractérisé en ce que le tuyau d'évacuation extérieur (26) débouche dans une chambre conique convergente (28) de mélange dans laquelle est introduit un fluide de propulsion pneumatique des matières pulvérulentes traversant l'orifice (22) et l'ouverture (34).

Fig.1

Fig.2

Fig. 3a

Fig. 3b

36

34

36

34

24

22

22

24

Fig. 4a

Fig. 4b

36

36

36

22

40

34

22

34

22

40

34

40

Fig. 5a

Fig. 5b

Fig. 5c